(19) **Europäisches Patentamt**
European Patent Office
Office européen des brevets

(11) **EP 1 539 525 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(21) Anmeldenummer: **03798054.7**

(22) Anmeldetag: **14.08.2003**

(51) Int Cl.:
*B60W 10/02* *(2006.01)*    *B60W 10/06* *(2006.01)*
*B60W 10/08* *(2006.01)*    *B60W 10/10* *(2006.01)*
*B60W 20/00* *(2006.01)*

(86) Internationale Anmeldenummer:
**PCT/DE2003/002738**

(87) Internationale Veröffentlichungsnummer:
**WO 2004/028848 (08.04.2004 Gazette 2004/15)**

(54) **ANTRIEBSSTRANG EINES KRAFTFAHRZEUGS UND VERFAHREN ZUM STEUERN EINES KRAFTFAHRZEUG-ANTRIEBSSTRANGS**

DRIVE TRAIN OF A MOTOR VEHICLE AND METHOD FOR CONTROLLING A MOTOR VEHICLE DRIVE TRAIN

CHAINE CINEMATIQUE D'UN VEHICULE AUTOMOBILE ET PROCEDE POUR COMMANDER UNE CHAINE CINEMATIQUE DE VEHICULE AUTOMOBILE

(84) Benannte Vertragsstaaten:
**DE FR IT**

(30) Priorität: **18.09.2002 DE 10243346**

(43) Veröffentlichungstag der Anmeldung:
**15.06.2005 Patentblatt 2005/24**

(73) Patentinhaber: **Continental Automotive GmbH
30165 Hannover (DE)**

(72) Erfinder: **DEIML, Matthias
93093 Donaustauf (DE)**

(56) Entgegenhaltungen:
**EP-A- 1 039 124       US-A- 6 138 629
US-A1- 2002 093 202    US-A1- 2002 117 860
US-B1- 6 365 983**

* WEIMER J ET AL: "HIGH-TECH SOLUTION FOR FUTURE 42 V VEHICLE ELECTRICAL SYSTEMS THE CRANKSHAFT STARTER GENERATOR SACHS DYNASTART" , AUTO TECHNOLOGY, VIEWEG PUBLISHING, WIESBADEN, DE, VOL. 1, NR. 5, PAGE(S) 68-69 XP001100820 ISSN: 1616-8216 das ganze Dokument

**Beschreibung**

Die Erfindung betrifft einen Antriebsstrang nach dem Oberbegriff von Anspruch 1 und ein Verfahren nach dem Oberbegriff von Anspruch 2. Der Antriebsstrang weist auf einen Motor mit Motorsteuerung und Leerlaufregelung, eine Kupplung, ein Getriebe und eine Kupplungs- und Getriebesteuerung, sowie eine elektrischen Maschine, durch die ein erforderliches zusätzliches Kriechdrehmoment erzeugt wird, und die mit einem die Drehzahl im Antriebsstrang regelnden Steuergerät versehen ist.

Die Antriebsstrangsteuerung ist für Kraftfahrzeuge mit automatischem Getriebe, sowohl des Planetenradtyps als auch des CVT-Typs vorgesehen, insbesondere für solche mit einem automatisierten Handschaltgetriebe, bei dem der Fahrer den einzulegenden Gang oder die Getriebeübersetzung bestimmt, der Schaltvorgang aber automatisch von der Getriebesteuerung durchgeführt wird. Sie ist aber auch für Kraftfahrzeuge mit rein manuellem Getriebe geeignet. Eine bekannte Steuerung für den Antriebsstrang eines Kraftfahrzeugs ermöglicht ein sicheres und komfortables automatisches Anfahren des Kraftfahrzeugs unter Berücksichtigung der jeweiligen Anfahrsituation (EP 1 078 805 A1).

Vorgeschlagen wurde auch ein Verfahren und eine Vorrichtung zur Steuerung der Fahrgeschwindigkeit eines Fahrzeugs im Rahmen einer Fahrgeschwindigkeitsregelung, wobei die Fahrgeschwindigkeitsregelung abhängig vom Fahrerverhalten ist (DE 196 11 502 A1).

Antriebsstränge moderner Kraftfahrzeuge weisen eine Kriechfunktion auf, zumindest ist eine solche wünschenswert. Bei der Kriechfunktion wird ein kleines Drehmoment über die Kupplung oder den Drehmomentwandler übertragen, das Fahrzeug setzt sich langsam in Bewegung und behält diese Bewegung so lange bei, wie es die Situation erfordert. Dabei ist je nach Temperatur, Steigung, Beladung usw. ein unterschiedliches Drehmoment an den Antriebsrädern notwendig. Der Verbrennungsmotor des Fahrzeugs muss neben dem die Leerlaufdrehzahl erzeugenden Antriebsdrehmoment ein zusätzliches Antriebsdrehmoment, das sogenannte Kriechmoment, abgeben. Bei der oben genannten Antriebsstrangsteuerung wird die Motordrehzahl beim Anfahren und im Kriechmodus durch die Motorsteuerung nach gespeicherten Kennlinien gesteuert.

Die EP-A 1 039 124, die den Oberbegriff des Anspruchs 1 bildet, beschreibt ein System zum automatischen Abschalten und Wiederan-lassen des Motors bei Stillstand eines Kraftfahrzeugs. Bei diesem System besteht der Antriebsstrang des Kraftfahrzeugs aus einem Motor und einer Motorsteuerung, die einen Leerlaufregler einschließt, einer Kupplung, einem Getriebe und einer Kupplungs- und Getriebesteuerung. Der Antriebsstrang weist außerdem eine elektrische Maschine (zum Beispiel einen Kurbelwellenstartergenerator) auf, die mit einem deren Drehzahl - und Drehmoment - regelnden Steuergerät versehen ist. Im Kriechbetrieb des Kraftfahrzeugs wird ein erforderliches zusätzliches Antriebsdrehmoment durch die elektrische Maschine erzeugt.

Der Erfindung liegt die Aufgabe zugrunde, einen Antriebsstrang eines Kraftfahrzeugs zu schaffen, durch den der Kraftstoffverbrauch und die Abgasemissionen des Motors mit einem sehr einfachen Steuerkonzept wirksam verringert werden.

Die Aufgabe der Erfindung wird durch einen Antriebsstrang nach Anspruch 1 und durch ein Verfahren nach Anspruch 2 gelöst. In dem Antriebsstrang wird das von der elektrischen Maschine beim Kriechen maximal abzugebende Drehmoment begrenzt und und die Drehzahl der elektrischen Maschine wird auf die Leerlaufsolldrehzahl des Motors geregelt; beim Kriechbetrieb der Ladungszustand eines Energiespeichers überprüft wird, und, falls er einen vorgegebenen Wert unterschreitet, wird das Erzeugen von Kriechmoment durch die elektrische Maschine unterbunden, und bei einer Kriechfahrt in einem Gefälle bei einer zu hohen Kriechgeschwindigkeit wird von der elektrischen Maschine durch Laden des Energiespeichers Bremsmoment aufgenommen und somit die Kriechgeschwindigkeit eingeregelt.

Zweckmäßige Weiterbildungen der Erfindung sind in den Unteransprüchen niedergelegt.

Die Vorteile der Erfindung liegen insbesondere darin, dass auch das Drehzahlverhalten des Antriebsstrangs gleichmäßiger wird und das Antriebsgeräusch verringert wird. Insbesondere wirkt sich der erfindungsgemäße Antriebsstrang ausgesprochen Vibrationen dämpfend aus. Auch werden der Kraftstoffverbrauch und die Abgasemissionen des Motors wirksam verringert.

Ausführungsbeispiele der Erfindung werden im folgenden anhand der Zeichnungen erläutert. Es zeigen:

Figur 1 einen Antriebsstrang gemäß der Erfindung in schematischer Darstellung;

Figur 2 den Verlauf der Fahrzeuggeschwindigkeit und des Raddrehmoments in einem Antriebsstrang nach Figur 1;

Figur 3 die Aufteilung des Antriebsdrehmoments und der Drehzahlen beim Kriechen des Kraftfahrzeugs in der Ebene;

Figur 4 die Aufteilung des Antriebsdrehmoments und der Drehzahlen beim Kriechen des Kraftfahrzeugs im Gefälle, und

Figur 5 ein Ablaufdiagramm eines beim Steuern des Antriebsstrangs nach Figur 1 abgearbeiteten Programms.

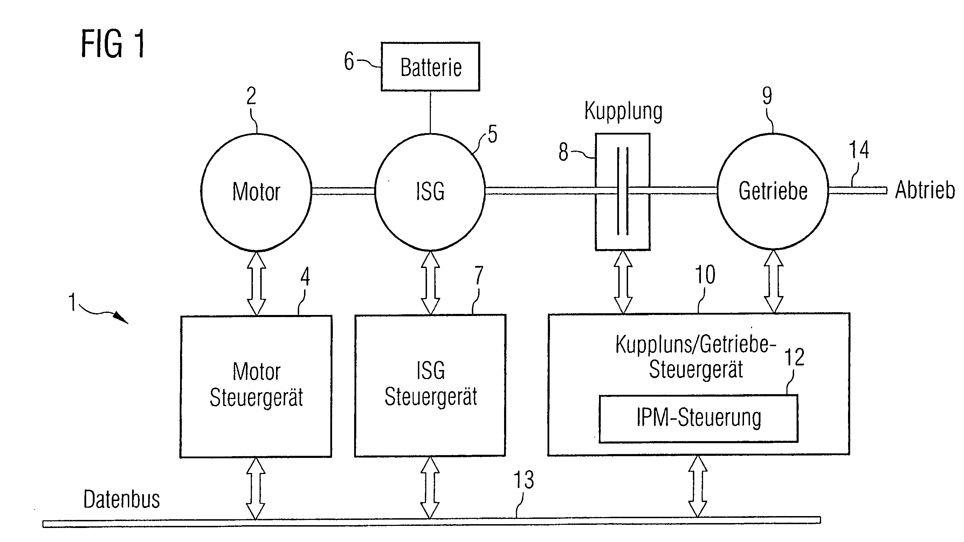

Ein Antriebsstrang 1 (Figur 1) eines Kraftfahrzeugs schließt mechanische Bestandteile ein, die im oberen Teil der Zeichnung dargestellt sind, und Steuerungen, die im unteren Teil der Zeichnung dargestellt sind: einen als Antriebsquelle 2 dienenden Motor mit einer elektronischen Motorsteuerung 4, eine elektrische Maschine 5, die in dem vorliegenden Ausführungsbeispiel als Startergenerator (abgekürzt: ISG) ausgeführt ist, mit zugehörigem Steuergerät (ISGS) 7 und einem Energiespeicher 6, eine Kupplung 8, ein automatisches Getriebe 9 sowie ein Kupplungs- und Getriebe-Steuergerät 10. Die Kupplung kann sowohl als mechanische Kupplung als auch als hydrodynamischer Drehmomentwandler ausgebildet sein. Der Energiespeicher 6 ist beispielsweise als eine von der Kraftfahrzeugbatterie unabhängige zusätzliche Batterie ausreichender Kapazität ausgebildet.

In das Steuergerät 10 ist auch eine Antriebsstrangsteuerung 12 - im folgenden auch als IPM-Steuerung bezeichnet - integriert, die übergeordnete und koordinierende Steuerfunktionen für den Antriebsstrang 1 durchführt. Die IPM-Steuerung 12 kann aber ebenso in das Steuergerät 7 oder in die Motorsteuerung 4 integriert sein. Die vorstehend aufgeführten Steuergeräte sind durch einen Datenbus 13 miteinander verbunden, an den auch andere, hier nicht weiter interessierende, Steuergeräte, Sensoren und Aktoren im Kraftfahrzeug angeschlossen sein können. Der hier ebenfalls nicht weiter interessierende Rest des Antriebsstrangs, das heißt die Gelenkwellen, Differential, Achswellen und Antriebsräder, ist durch eine Abtriebswelle 14 symbolisiert.

Das Kraftfahrzeug ist mit einer Kriechfunktion oder einem Kriechmodus versehen, die der Antriebsstrang 1 zur Verfügung stellt. Bei der Kriechfunktion wird ein kleines Drehmoment über die Kupplung oder den Wandler 8 an das Getriebe 9 übertragen, das Fahrzeug setzt sich langsam in Bewegung. Je nach den umgebenden Verkehrsbedingungen kann sich das Kraftfahrzeug auch über längere Zeit langsam fort bewegen müssen, zum Beispiel mit Schrittgeschwindigkeit. Das bei der Kriechfahrt an den Antriebsrädern notwendige Drehmoment hängt von der Temperatur, der Fahrbahnsteigung, der Beladung des Kraftfahrzeugs und so weiter ab. Bei einem Mittelklassefahrzeug beträgt das Raddrehmoment bei einer Fahrzeuggeschwindigkeit von 10 km/h etwa 50 Nm. Zum Beschleunigen auf 10 km/h ist hingegen ein Raddrehmoment von etwa 200 Nm erforderlich.

Muss der Motor bei der Kriechfahrt zusätzlich zur Leerlaufdrehzahl ein Kriechmoment abgeben und wird dazu wie üblich ein relativ träge reagierender Regler mit Momentenbegrenzung eingesetzt, so verursacht das Erzeugen des Kriechmoments einen höheren Kraftstoffverbrauch und erhöhte Abgasemissionen. Außerdem ergibt sich ein ungleichmäßiges Drehzahlverhalten des Motors und ein erhöhtes Motorgeräusch. Diese Nachteile werden hier vermieden, indem das Kriechmoment von einer elektrischen Maschine geliefert wird.

Der Startergenerator (= ISG) 5 ist eine elektrische Maschine, die, gespeist von einer Batterie, Drehmoment - im folgenden auch als ISG-Drehmoment bezeichnet - an die Kurbelwelle abgeben kann. Die Maschine kann momentengesteuert oder drehzahlgeregelt betrieben werden. Der Leerlaufregler des Verbrennungsmotors wird durch den Drehzahlregler des ISG-Steuergeräts ergänzt und unterstützt. Die Ansprechzeit des ISG beim Drehmomentaufbau ist um einen Faktor 3 bis 5 schneller als die des Verbrennungsmotors.

Die Möglichkeit drehzahlgeregelt zu fahren, erlaubt ein sehr einfaches Steuerkonzept in der Antriebsstrangsteuerung (IPM) 12. Das sich durch die Drehzahlregelung ergebende Motordrehmoment muss durch die IPM-Steuerung 12 nur begrenzt und überwacht werden, das heißt sie muss nur dafür sorgen, dass keine unplausibel hohen Drehmomente auftreten, das heißt das Drehmoment $M_{ISG}$ der elektrischen Maschine 5 muss kleiner als ein vorgegebener Maximalwert $M_{max}$ sein:

$$M_{ISG} \leq M_{\max}$$

Das spezielle Problem eines falschen Anrollens am Berg wird durch eine Drehmoment-Geschwindigkeits-Analyse behandelt. Eine genauere Berechnung des notwendigen ISG-Moments ist nicht notwendig. Die Bestimmung erfolgt in dem Kupplungssteuergerät 10, durch das ein Kupplungs- oder ein Raddrehmoment $M_{Rad}$ eingestellt wird.

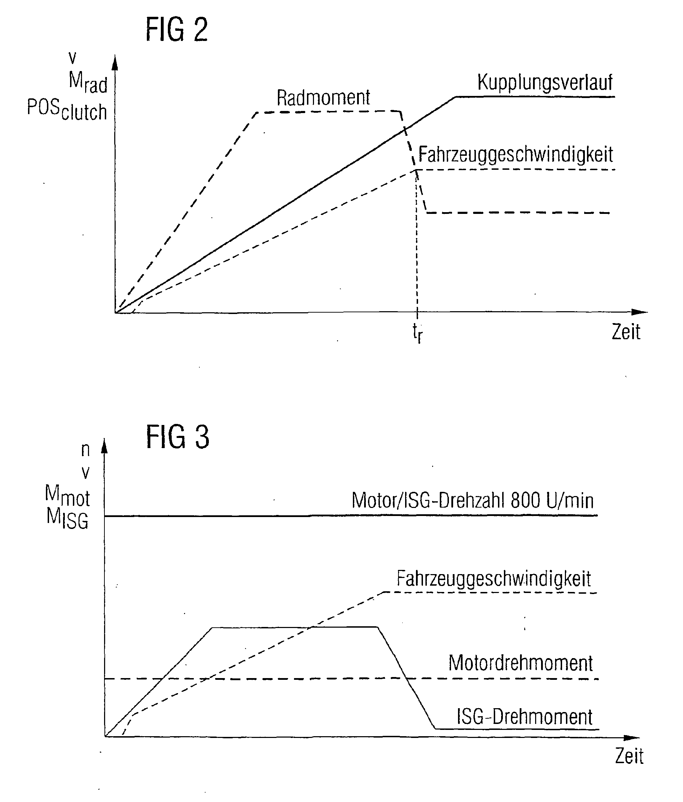

Anhand der Figuren 2 bis 4 werden die Vorgänge, die im Antriebsstrang 1 beim Kriechmodus des Kraftfahrzeugs ablaufen, im Einzelnen erläutert. Der Kriechmodus wird durch das ISG-Steuergerät erkannt, wenn folgende Bedingungen erfüllt sind: es ist ein Gang eingelegt, das Kraftfahrzeug steht, der Motor läuft und weder Bremse noch Fahrpedal sind betätigt: Der Antriebsstrang 1 wird dann in Kriechfahrt versetzt.

Die elektrische Maschine 5 wird durch die IPM-Steuerung 12 auf Drehzahlregelung und Momentenbegrenzung geschaltet. Die Kupplung wird langsam geschlossen. Wird das maximale Drehmoment überschritten, zum Beispiel bei einer Steigung, bleibt die Kupplung im Schlupf. Bei der Drehzahlregelung wird eine konstante Drehzahl (etwa die Leerlaufdrehzahl des Motors) eingeregelt. Bei dieser Drehzahl bewegt sich das Fahrzeug im ersten Gang etwa mit Schrittgeschwindigkeit, 5 bis 10 km/h, wenn kein Schlupf an der Kupplung auftritt. Wird ein zu niedriger Ladungszustand der Batterie 6 erkannt, wird die Funktion "elektrisches Kriechen" nicht aktiviert. Dies wird in der Antriebsstrangsteuerung berücksichtigt, zum Beispiel durch Vorsteuern des Leerlaufreglers des Motors 2.

Aus dem Diagramm von Figur 2 ist der Verlauf des Radmoments, das heißt der zeitliche Verlauf des an den angetriebenen Rädern abgegebenen Antriebsdrehmoments, beim Anfahren und anschließender Kriechfahrt eines Kraftfahrzeugs ersichtlich. Außerdem sind der Verlauf der Kupplungsposition $POS_{clutch}$ und der Fahrzeuggeschwindigkeit v dargestellt.

Das Drehmoment wird durch Schließen der Kupplung übertragen. Bei stehendem Fahrzeug ist ein Losbrechmoment zu überwinden, danach wird das Fahrzeug beschleunigt und schließlich auf einer konstanten Geschwindigkeit gehalten. Dabei wird zu Beginn das Radmoment langsam aufgebaut, die Kupplung bewegt sich langsam in Richtung auf ihre Schließstellung, während die Fahrzeuggeschwindigkeit zunimmt. Bei noch schlupfender Kupplung nimmt das Radmoment ab. Nach Erreichen der Kriechgeschwindigkeit zu einem Zeitpunkt $t_r$ wird diese beibehalten, die Kupplung schließt ganz und das Radmoment nimmt einen niedrigeren konstanten Wert an, der nur den Fahrwiderstand ausgleicht.

Aus dem Diagramm von Figur 3 ist die Aufteilung des Antriebsdrehmoments auf das Motordrehmoment $M_{mot}$ und das Drehmoment $M_{ISG}$ der elektrischen Maschine 5 ersichtlich. Außerdem sind die Fahrzeuggeschwindigkeit v und die Drehzahl n bei einer Kriechfahrt in der Ebene über der Zeit dargestellt. Die Drehzahl n des Motors ist gleich der Drehzahl der elektrischen Maschine, da diese mit der Kurbelwelle des Motors verbunden ist. Sie beträgt im vorliegenden Ausführungsbeispiel annähernd 800 U/min.

Der Motor liefert ein konstantes geringes Motordrehmoment $M_{mot}$. Die elektrische Maschine 5 liefert das jeweils notwen-dige Differenzdrehmoment $M_{ISG} = M_{Rad} - M_{mot}$. Es wird zunächst auf einen ersten, höheren konstanten Wert aufgebaut und sinkt, nachdem die Fahrzeuggeschwindigkeit den Wert der Kriechgeschwindigkeit erreicht hat, auf einen zweiten, niedrigeren konstanten Wert. Die Motordrehzahl ist während der gesamten Zeit konstant. Dies führt zu einem Wegfall von zusätzlichen Abgasemissionen und ergibt ein besseres Regelverhalten als das eines Motor-Leerlaufreglers. Um die konstante Geschwindigkeit zu halten ist, wenn keine Steigung vorliegt, nahezu kein ISG-Drehmoment notwendig. Deshalb wird auch kein nennenswerter elektrischer Strom verbraucht.

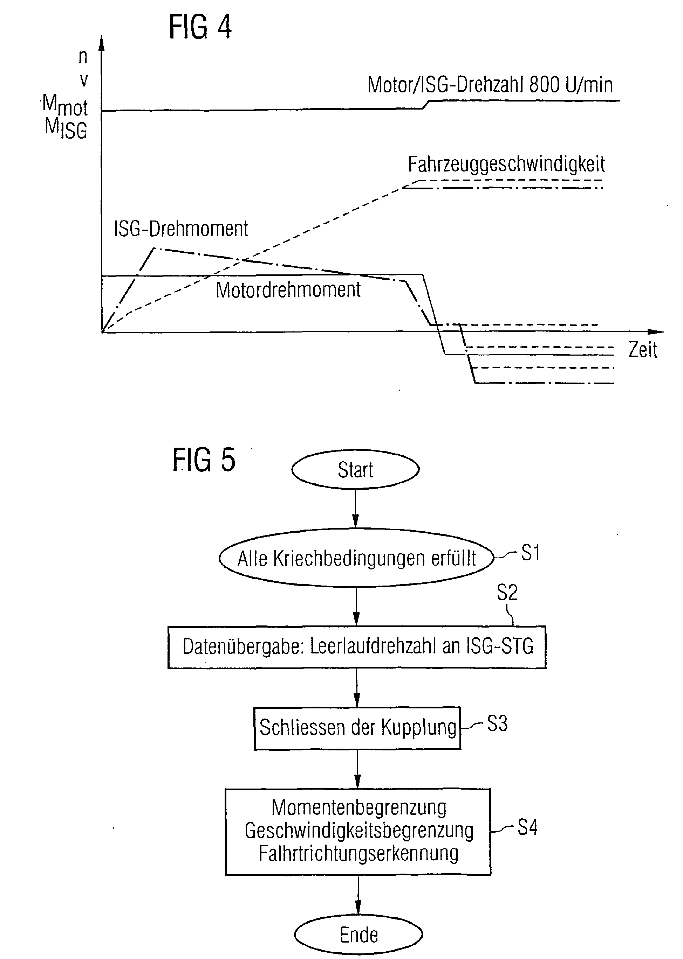

Aus dem Diagramm von Figur 4 ist die Aufteilung des Antriebsdrehmoments bei einer Kriechfahrt an einem Gefälle ersichtlich. Aufgetragen sind über der Zeit die Motor- und ISG-Drehzahl n, die Fahrzeuggeschwindigkeit v, das ISG-Drehmoment $M_{ISG}$ und das Motordrehmoment $M_{mot}$. Hier genügt ein geringeres Drehmoment zum Erreichen der Kriechgeschwindigkeit; durch das Gefälle ergibt sich bald eine zu hohe Kriechgeschwindigkeit und somit eine Erhöhung der Motordrehzahl. Der Motor geht möglicherweise auf Schubabschaltung, die elektrische Maschine 5 kann durch Laden des Energiespeichers 6 Bremsmoment aufnehmen und so die Kriechgeschwindigkeit einregeln. Das variable ISG-Drehmoment stabilisiert die Kraftfahrzeuggeschwindigkeit, der Motor wird geschleppt. Hier kann ein positiver Drehzahloffset in Kauf genommen werden, um den Motor in einem konstanten Betriebsmodus zu halten.

Zum Steuern des Antriebsstrangs 1 im Kriechmodus wird ein in Figur 5 als Ablaufdiagramm dargestelltes Programm abgearbeitet. Es weist folgende Schritte auf.

Nach dem Start des Programms wird in einem Schritt

S1 abgefragt, ob alle Kriechbedingungen erfüllt sind, : das heißt, ob der erste Gang eingelegt ist, das Kraftfahrzeug steht, das Fahrpedal und das Bremspedal nicht niedergedrückt sind usw. Wenn ja, erfolgt in einem Schritt

S2 eine Datenübergabe: die Leerlaufsolldrehzahl wird von der Motorsteuerung 4 über die IPM-Steuerung 12 an das ISGSteuergerät 7 übergeben. Danach wird in einem Schritt

S3 die Kupplung langsam schrittweise geschlossen. Dann werden in einem Schritt

S4 das Motordrehmoment und die Fahrzeuggeschwindigkeit begrenzt und eine Fahrtrichtungserkennung durchgeführt. Damit ist ein Programmdurchlauf an seinem

Ende.

Dieses Programm wird zyklisch wiederholt.

Wichtig Aspekte des Antriebsstrangs 1 und des Steuerverfahrens für diesen Antriebsstrang sind folgende:

- Die Benutzung der elektrische Maschine (ISG) 5 zum Bereitstellen eines Kriechmoments.
- Der Betrieb der elektrischen Maschine 5 im Drehzahlregelmodus, und zwar Regelung auf die Leerlaufsolldrehzahl des Motors 2.
- Die Begrenzung des maximal abzugebenden Drehmoments $M_{ISG}$ der elektrischen Maschine (ISG) 5 während des Kriechens, zum Beispiel an einer Steigung.
- Die Abfrage von und eine Reaktion auf unterschiedliche Ladungszustände des Energiespeichers (Batterie) für die elektrische Maschine.
- Die Benutzung der Ladefunktion der elektrischen Maschine beim Kriechen auf einem Gefälle.

Patentansprüche

1. Antriebsstrang (1) eines Kraftfahrzeugs

   - mit einem Motor (2) mit Motorsteuerung (4) und Leerlaufregelung, einer Kupplung, einem Getriebe (9) und einer Kupplungs- und Getriebesteuerung (10), sowie
   - mit einer elektrischen Maschine (5), durch die ein erforderliches zusätzliches Kriechdrehmoment erzeugt wird, und die mit einem die Drehzahl im Antriebsstrang (1) regelnden Steuergerät (7) versehen ist,

   dadurch gekennzeichnet,

   - dass im Kriechbetrieb das von der elektrischen Maschine (5) maximal abzugebende Drehmoment $(M_{ISG})$ begrenzt und die Drehzahl der elektrischen Maschine (5) auf die Leerlaufsolldrehzahl des Motors geregelt wird;
   - dass beim Kriechbetrieb der Ladungszustand eines Energiespeichers (6) überprüft wird, und, falls er einen vorgegeben Wert unterschreitet, das Erzeugen von Kriechmoment durch die elektrische Maschine (5) unterbunden wird, und
- **dass** bei einer Kriechfahrt in einem Gefälle bei einer zu hohen Kriechgeschwindigkeit von der elektrischen Maschine (5) durch Laden des Energiespeichers (6) Bremsmoment aufgenommen und somit die Kriechgeschwindigkeit eingeregelt wird.

2. Verfahren zum Steuern eines Kraftfahrzeug-Antriebsstrangs, nach Anspruch 1, **dadurch gekennzeichnet,**

- **dass** die Leerlaufdrehzahl des Motors und die Drehzahl einer in den Antriebsstrang eingefügten elektrische Maschine (5) geregelt werden;
- **dass** im Kriechbetrieb des Kraftfahrzeugs ein erforderliches zusätzliches Antriebsdrehmoment durch die elektrische Maschine (5) erzeugt wird;
- **dass** im Kriechbetrieb die Drehzahl der elektrischen Maschine (5) auf die Leerlaufsolldrehzahl des Motors geregelt wird;
- **dass** im Kriechbetrieb des Kraftfahrzeugs die Drehzahlregelung des Motors (2) durch die Drehzahlregelung der elektrischen Maschine (5) unterstützt wird, und
- **dass** bei einer Kriechfahrt des Kraftfahrzeugs auf einem Gefälle, ein elektrischer Energiespeicher (6) durch die elektrische Maschine (5) geladen wird.

**Claims**

1. Drive train (1) of a motor vehicle

- with a motor (2) with motor controller (4) and idle speed regulator, a clutch, a gearbox (9) and a clutch and gearbox controller (10) and
- with an electric generator (5), which generates a required additional creep torque and which is provided with a control device (7) that regulates the speed in the drive train (1),

**characterised in that**

- in creep mode the maximum torque $(M_{ISG})$ to be delivered by the electric generator (5) is limited and the speed of the electric generator (5) is regulated to the setpoint idle speed of the motor;
- in creep mode the charge state of an energy storage unit (6) is checked and, if it is below a predetermined value, the generation of creep torque by the electric generator (5) is suppressed and
- in creep mode on a gradient at too high a creep velocity braking torque is absorbed by the electric generator (5) by charging the energy storage unit (6), thereby regulating the creep velocity.

2. Method for controlling a motor vehicle drive train according to claim 1, **characterised in that**

- the idle speed of the motor and the speed of an electric generator (5) integrated in the drive train are regulated;
- with the motor vehicle in creep mode a required additional drive torque is generated by the electric generator (5);
- in creep mode the speed of the electric generator (5) is regulated to the setpoint idle speed of the motor;
- with the motor vehicle in creep mode the speed regulator of the motor (2) is assisted by the speed regulator of the electric generator (5) and
- with the motor vehicle in creep mode on a gradient an electrical energy storage unit (6) is charged by the electric generator (5).

**Revendications**

1. Chaîne cinématique (1) d'un véhicule automobile, comprenant

-- un moteur (2) équipé d'une commande de moteur (4) et d'une régulation du ralenti, un embrayage, une boîte de vitesses (9) et une commande d'embrayage et de boîte de vitesses (10), ainsi que
-- une machine électrique (5) qui produit un couple de marche lente additionnel nécessaire et qui est munie d'un appareil de commande (7) qui règle la vitesse de rotation dans la chaîne cinématique (1)

**caractérisée**

-- **en ce que**, dans le fonctionnement en marche lente, le couple $(M_{rsc})$ qui doit être développé au maximum par la machine électrique (5) est limité et la vitesse de rotation de la machine électrique (5) est réglée sur la vitesse de rotation de consigne de ralenti du moteur ;
-- **en ce que**, dans le fonctionnement en marche lente, l'état de charge d'un accumulateur d'énergie (6) est contrôlé et, s'il devient inférieur à une valeur prédéterminée, la production de couple de marche lente par la machine électrique (5) est interrompue, et
-- **en ce que**, dans un parcours en marche lente en pente, dans le cas d'une vitesse de marche lente trop élevée, un couple de freinage est absorbé par la machine électrique (5), par charge de l'accumulateur d'énergie (6) et la vitesse de marche lente est ainsi est réglée.

2. Procédé pour commander une chaîne cinématique d'un véhicule automobile selon la revendication 1, **caractérisé**

> - **en ce que** la vitesse de rotation de ralenti du moteur et la vitesse de rotation de la machine électrique (5) intercalée dans la chaîne cinématique sont réglées ;
> - **en ce que**, dans le fonctionnement en marche lente du véhicule automobile, un couple d'entraînement additionnel nécessaire est produit par la machine électrique (5) ;
> - **en ce que**, dans le fonctionnement en marche lente, la vitesse de rotation de la machine électrique (5) est réglée sur la vitesse de rotation de consigne de ralenti du moteur ;
> - **en ce que**, dans le fonctionnement en marche lente du véhicule automobile, la régulation de vitesse de rotation du moteur (2) est assistée par la régulation de vitesse de rotation de la machine électrique (5), et
> - **en ce que**, dans un parcours en marche lente du véhicule automobile sur une pente l'accumulateur d'énergie électrique (6) est chargé par la machine électrique (5).

**FIG 1**

EP 1 539 525 B1

FIG 2

FIG 3

## FIG 4

n
v
$M_{mot}$
$M_{ISG}$

Motor/ISG-Drehzahl 800 U/min

Fahrzeuggeschwindigkeit

ISG-Drehmoment

Motordrehmoment

Zeit

## FIG 5

Start

Alle Kriechbedingungen erfüllt — S1

Datenübergabe: Leerlaufdrehzahl an ISG-STG — S2

Schliessen der Kupplung — S3

Momentenbegrenzung
Geschwindigkeitsbegrenzung
Falhrtrichtungserkennung — S4

Ende

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1078805 A1
- DE 19611502 A1

- EP 1039124 A